# EUROPÄISCHE PATENTSCHRIFT

(11) **EP 0 962 632 B1**
(45) Veröffentlichungstag und Bekanntmachung des Hinweises auf die Patenterteilung: **26.11.2003**
(21) Anmeldenummer: 99108930.1
(22) Anmeldetag: 05.05.1999
(51) Int. Cl.: F01N 3/20, B01D 53/94

(54) **Verfahren und Vorrichtung zur Stickoxidreduktion mittles Harnstoff in mit Katalysatoren ausgerüsteten Abgasanlagen von Brennkraftmaschinen, insbesondere auf Kraftfahrzeugen**
Process and device for reducing nitrogen oxides by using urea in the exhaust systems of internal combustion engines equipped with catalytic converters, especially for motor vehicles
Procédé et dispositif de réduction des oxydes d'azote en utilisant l'urée dans les systèmes de gaz d'échappement de moteurs à combustion interne équipés de catalyseurs, notamment pour véhicules automobiles

(30) Priorität: 05.06.1998 DE 19825148
(43) Veröffentlichungstag der Anmeldung: 08.12.1999
(73) Patentinhaber: Bayerische Motoren Werke Aktiengesellschaft, 80788 München (DE)
(72) Erfinder: Fischer, Gregor, 85737 Ismaning (DE)

(56) Entgegenhaltungen:
- EP-A- 0 666 099
- DE-A- 4 200 514
- DE-A- 4 308 542
- PATENT ABSTRACTS OF JAPAN vol. 018, no. 044 (M-1547), 24. Januar 1994 (1994-01-24) & JP 05 272331 A (HINO MOTORS LTD), 19. Oktober 1993 (1993-10-19)
- PATENT ABSTRACTS OF JAPAN vol. 015, no. 012 (C-0795), 10. Januar 1991 (1991-01-10) & JP 02 261519 A (BABCOCK HITACHI KK), 24. Oktober 1990 (1990-10-24)
- PATENT ABSTRACTS OF JAPAN vol. 015, no. 031 (C-0798), 24. Januar 1991 (1991-01-24) & JP 02 268811 A (HITACHI ZOSEN CORP), 2. November 1990 (1990-11-02)

## Beschreibung

Die Erfindung bezieht sich nach dem Oberbegriff des Patentanspruches 1 auf ein Verfahren zur Stickoxid-Reduktion mittels Harnstoff in mit Katalysatoren ausgerüsteten Abgasanlagen von Brennkraftmaschinen, insbesondere auf Kraftfahrzeugen, wobei ein bevorratetes Gemenge aus mit einem Trägermaterial gemischten Harnstoffpulver verwendet wird zur Eindosierung in die Abgasanlage stromauf des Katalysators.

Aus der japanischen Patent-Offenlegungsschrift 02-261 519 ist ein derartiges Verfahren beispielsweise. für Harnstoff bekannt, wobei dieser dem Abgas in Pulverform oder als Lösung oder als Aufschlämmung beigesetzt wird. Aufgeschlämmter oder beispielsweise in Wasser gelöster Harnstoff können bei tiefen Umgebungstemperaturen zu einer durch Stocken zähfließenden Masse oder gegebenenfalls zu einer gefrorenen Masse führen und damit eine exakte Dosierung oder eine Dosierung überhaupt unterbinden. Die Zugabe von Harnstoff als Pulver ist schwierig zu dosieren und einzubringen, wobei im Laufe der Zeit ein Verklumpen des Pulvers nicht auszuschließen ist. Hinzu kommt ferner ein umständliches Handling. Ein Teil der vorgenannten Nachteile entfällt zwar, wenn das Harnstoff-Pulver an Bord des Kraftfahrzeuges aus einem Feststoff erzeugt wird, jedoch bleibt der wesentliche Nachteil der schwierigen Dosierung des Pulvers und dessen Einbringung in den Abgasstrom bestehen.

Bekanntlich werden die in den Abgasen enthaltenen Stickoxide an einem Katalysator unter Zugabe von Ammoniak oder ammoniakbildenden Verbindungen zu Stickstoff und Wasser reduziert. Da die Zugabe von Ammoniak in das Abgas aufwendig ist und im Hinblick auf einen unzulässigen Ammoniak-Durchbruch eine komplizierte Dosier-Steuerung erforderlich macht, wird die Zugabe von Harnstoff in das Abgas bevorzugt, der in Verbindung mit dem im Abgas enthaltenen Wasser Ammoniak liefert.

Der Erfindung liegt die Aufgabe zugrunde, ein gattungsgemäßes Verfahren der Harnstoffzugabe derart zu verbessern, daß bei einfachem, sicherem Handling in der Bevorratung jederzeit eine den Betriebsanforderungen entsprechende Dosierung von Harnstoff in das Abgas erzielt ist bzw. wird.

Diese Aufgabe ist mit dem Patentanspruch 1 dadurch gelöst, daß als Trägermaterial eine Kohlenwasserstoff-Verbindung gewählt wird mit einem Schmelzpunkt zwischen einer vorbestimmten Umgebungstemperatur ≥ 30°C und einem üblichen Betriebstemperaturbereich von 70° bis 110°C der Brennkraftmaschine, wobei die Kohlenwasserstoff-Verbindung in der Abgasanlage im gesamten Temperaturbereich von ca. 150°C bis 850°C rückstandsfrei verbrannt bzw. am Katalysator oxidiert wird, und der im Abgas freigesetzte Harnstoff mit dem Wasser im Abgas zu Ammoniak umgebildet wird und dieser zur NOₓ-Reduktion am Katalysator dient. Die Umwandlung von Harnstoff in Ammoniak mittels Wasser kann gewöhnlich mit einem Hydrolysekatalysator erfolgen.

Als den vorgenannten Anforderungen dienende Kohlenwasserstoff-Verbindungen dienen vorzugsweise Paraffine, Stearine oder Fette.

Der Vorteil der Erfindung liegt in der Wahl eines derartigen Trägermaterials, das bei üblichen Umgebungstemperaturen einen festen Zustand aufweist, und das mit verhältnismäßig geringer Energiezufuhr in einen flüssigen Zustand überführbar ist. Damit kann das in einem solchen Trägermaterial relativ dicht zu packende Harnstoff-Pulver einwandfrei entsprechend dem betriebsabhängigen Stickoxid-Anfall zudosiert werden.

Dieser erfindungsgemäße Gemengevorrat aus Trägermaterial und Harnstoffpulver bietet durch seinen festen Zustand bei üblichen Umgebungstemperaturen ein einfaches Handling, das nach einem Unteranspruch weiter dadurch unterstützt ist, daß der Gemengevorrat als in Kartuschen verpackt oder als zylindrischen Tabletten ohne Verpackung Verwendung findet.

Zur Durchführung des erfindungsgemäßen Verfahrens ist in einem weiteren Unteranspruch eine Harnstoff-Dosiervorrichtung beschrieben, bei der gemäß der gattungsbildenden Schrift von einem Vorratsbehälter zur Gemengebevorratung ausgegangen ist, der über eine Leitung mit einer Dosiereinheit zur Gemengeeinführung in die Abgasanlage verbunden ist. Die Harnstoff-Dosiervorrichtung kennzeichnet sich demgegenüber dadurch, daß zur Verflüssigung des bei Umgebungstemperatur festen Gemengevorrates im Vorratsbehälter dieser mit einem Heizmantel ausgerüstet ist und daß in dem einer Vorrats-Verdrängungseinrichtung entgegengesetzten, der Einbringung des festen Gemengevorrates dienenden Endbereich des Vorratsbehälters eine mit einer Begleitheizung ausgestattete Leitung anschließt, wobei die mit einem Zwischenspeicher baulich kombinierte Dosiereinheit einen gemeinsamen, von der Betriebstemperatur der Brennkraftmaschine unabhängig betreibbaren Heizmantel aufweist.

Vorteilhafte Ausgestaltungen der Harnstoff-Dosiervorrichtung sind in weiteren Unteransprüchen beschrieben.

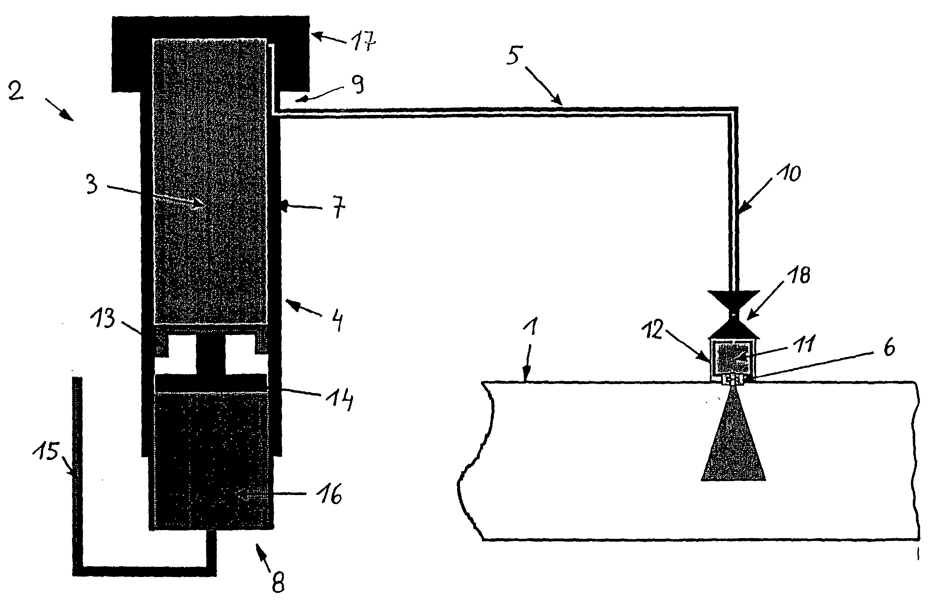

Die Erfindung ist anhand eines in der Zeichnung schematisch dargestellten Ausführungsbeispiels beschrieben.

Bei einem Verfahren zur Stickoxid-Reduktion mittels Harnstoff in einer mit einem nicht gezeigten Katalysator ausgerüsteten Abgasanlage 1 einer nicht dargestellten Brennkraftmaschine auf einem nicht gezeigten Kraftfahrzeug wird ein in einer Harnstoff-Dosiervorrichtung 2 bevorratetes Gemenge 3 aus mit einem Trägermaterial gemischtem Harnstoffpulver verwendet zur Eindosierung in die Abgasanlage 1 stromauf des nicht gezeigten Katalysators.

Um aufgabengemäß zu erreichen, daß bei einfachem, sicheren Handling in der Bevorratung des Gemenges 3 jederzeit eine den Betriebsanforderungen entsprechende Dosierung von Harnstoff in das Abgas erzielt ist, wird erfindungsgemäß vorgeschlagen, daß als Trägermaterial eine Kohlenwasserstoff-Verbindung gewählt wird mit einem Schmelzpunkt zwischen einer vorbestimmten Umgebungstemperatur ≥ 30°C und einem üblichen Betriebstemperaturbereich von 70°C bis 110°C der nicht gezeigten Brennkraftmaschine, wobei die Kohlenwasserstoff-Verbindung in der Abgasanlage 1 im gesamten Temperaturbereich von ca. 150°C bis 850°C rückstandsfrei verbrannt bzw. am Katalysator oxidiert wird, und der im Abgas freigesetzte Harnstoff mit dem Wasser im Abgas zu Ammoniak umgebildet wird und zur NOₓ-Reduktion am Katalysator dient.

Vorzugsweise dient als Kohlenwasserstoff-Verbindung ein Paraffin oder ein Stearin, ein Fett oder ein Wachs.

Die zur Durchführung des vorbeschriebenen, erfindungsgemäßen Verfahrens dienende Harnstoff-Dosiervorrichtung 2 umfaßt zur Bevorratung des Gemenges 3 einen Vorratsbehälter 4, der über eine Leitung 5 mit einer Dosiereinheit 6 zur Gemengeeinführung in die Abgasanlage 1 verbunden ist.

Zur Verflüssigung des bei Umgebungstemperatur festen Gemengevorrates 3 im Vorratsbehälter 4 ist dieser mit einem Heizmantel 7 ausgerüstet, wobei die in dem einer Vorrats-Verdrängungseinrichtung 8 entgegengesetzten, der Einbringung des festen Gemengevorrates 3 dienenden Endbereich 9 des Vorratsbehälters 4 die mit einer Begleitheizung 10 ausgestattete Leitung 5 anschließt und ferner die mit einem Zwischenspeicher 11 baulich kombinierte Dosiereinheit 6 einen gemeinsamen, von der Betriebstemperatur der Brennkraftmaschine unabhängig betreibbaren Heizmantel 12 aufweist.

Die Verdrängungseinrichtung 8 im Vorratsbehälter 4 umfaßt einen auf den Gemengevorrat 3 einwirkenden Verdränger-Kolben 13, der mittels eines Trennkolbens 14 über ein an Bord des Kraftfahrzeuges vorhandenes Hydrauliksystem 15, wie z.B. das Schmiersystem der Brennkraftmaschine, gegen die Wirkung einer Rückstellfeder 16 betätigt ist.

Weiter ist der Vorratsbehälter 4 in seinem Endbereich 9 mit der Öffnung zur Einführung des Gemengevorrates 3 mit einem Sicherheits-Verschlußdeckel 17 ausgerüstet, der lediglich bei drucklos gehaltenem Gemengevorrat 3 betätigbar ist. Somit ist sichergestellt, daß bei geschmolzenem Gemengevorrat 3 ein Öffnen des Vorratsbehälters 4 durch Abnahme des Verschlußdeckels 17 unterbunden und Verletzungen der bedienenden Person vermieden sind.

Ferner ist der Vorratsbehälter 4 mit einem elektrisch und/oder mit bordeigenen flüssigen Betriebsstoffen von hoher Temperatur, wie z.B. Kühlwasser oder Schmieröl, betreibbaren Heizmantel 7 ausgerüstet, wobei der Heizmantel 7 im Endbereich 9 des Vorratsbehälters 4 mit angeschlossener Leitung 5 für eine erhöhte Heizleistung ausgelegt ist. Damit ist in vorteilhafter Weise sichergestellt, daß ein hochtemperiertes Gemenge 3 in die mit einer Begleitheizung 10 ausgestattete Leitung 5 eintritt und das Gemenge sicher im flüssigen Zustand über ein Regelventil 18 der Leitung 5 in den Zwischenspeicher 11 der Dosiereinheit 6 gelangt. Mit dem Regelventil 18 wird der Druck oder das Niveau des Gemenges 3 im Zwischenspeicher 11 geregelt.

Eine genaue Eindosierung des Harnstoff-Gemenges 3 in die Abgasanlage 1 ist schließlich mit einer Dosiereinheit 6 erzielt, die gemäß der Bauart eines Tintenstrahldruckers mit einer bedarfsweise ansteuerbaren Heizeinrichtung und einem Piezoaktor gestaltet ist.

Die Funktionsweise der Harnstoff-Dosiervorrichtung 2 ist dergestalt, daß zunächst bei einem Kaltstart der Brennkraftmaschine der der Dosiereinrichtung 6 vorgelagerte Zwischenspeicher 11 über den von der Betriebstemperatur der Brennkraftmaschine unabhängig betreibbaren, vorzugsweise elektrisch betriebenen Heizmantel 12 erwärmt wird zur Verflüssigung des enthaltenen Gemengevorrates.

Mit Beendigung der Warmlaufphase der Brennkraftmaschine steht ausreichend erwärmtes Kühlwasser zur Verfügung, das sowohl dem Heizmantel 7 des Vorratsbehälters 4 als auch der Begleitheizung 10 der Leitung 5 zugeführt ist zur Erwärmung des in diesen Bauteilen enthaltenen Gemenges mit Harnstoffpulver. Weiter wirkt im Hydrauliksystem 15 vorzugsweise der Schmieröldruck der Brennkraftmaschine über den Trennkolben 14 auf den Verdrängerkolben 13 ein, so daß zumindest der im oberen Endbereich 9 des Vorratsbehälters 4 geschmolzene Gemengevorrat 3 über die Leitung 5 in den Zwischenspeicher 11 für die Dosiereinheit 6 gefördert wird.

Die Ansteuerung der Piezoaktoren und der diesen zugeordneten Heizelemente der Dosiereinheit 6 erfolgt in Abhängigkeit der die Abgasanlage 1 mit dem Abgas durchströmenden NOₓ-Anteile.

Bei stehendem Motor und abgesunkenem Schmieröl-Druck im Hydrauliksystem 15 werden Verdrängerkolben 13 und Trennkolben 14 gemeinsam von einer Rückzugfeder 16 zur Entlastung des Gemengevorrates 3 in Richtung Ausgangslage bewegt, womit der Sicherheits-Verschlußdeckel 17 entlastet ist und geöffnet werden kann zur Einbringung eines Gemengevorrates 3 beispielsweise in Form zylindrischer Tabletten ohne eine Verpackung.

Sinkt der Gemengepegel im Zwischenspeicher 11 unter einen bestimmten Wert ab, öffnet das Regelventil 18 zum Auffüllen des Zwischenspeichers 11 mit dem Harnstoff-Gemenge 3.

Als Vorteile der Erfindung sind zu nennen ein einfaches, sauberes Handling des Harnstoff-Gemenges, das in sicherer Weise auch in Teilmengen nachgefüllt werden kann. Weiter spielen tiefe Umgebungstemperaturen für die Zudosierung keine Rolle und im übrigen ergibt sich mit dem in einer rückstandsfrei verbrennbaren Flüssigkeit mitgetragenen Harnstoffpulver eine genaue Zumessung in den Abgasstrang 1.

## Patentansprüche

1. Verfahren zur Stickoxid-Reduktion mittels Harnstoff in mit Katalysatoren ausgerüsteten Abgasanlagen von Brennkraftmaschinen, insbesondere auf Kraftfahrzeugen,
- wobei ein bevorratetes Gemenge (3) aus mit einem Trägermaterial gemischten Harnstoffpulver verwendet wird zur Eindosierung in die Abgasanlage (1) stromauf des Katalysators,
**dadurch gekennzeichnet,**
- **daß** als Trägermaterial eine Kohlenwasserstoff-Verbindung gewählt wird mit einem Schmelzpunkt zwischen einer vorbestimmten Umgebungstemperatur 30°C und einem üblichen Betriebstemperaturbereich von 70° bis 110°C der Brennkraftmaschine, wobei
- die Kohlenwasserstoff-Verbindung in der Abgasanlage (1) im gesamten Temperaturbereich von ca. 150°C bis 850°C rückstandsfrei verbrannt bzw. am Katalysator oxidiert wird, und
- der im Abgas freigesetzte Harnstoff mit dem Wasser im Abgas zu Ammoniak umgebildet wird und zur NOₓ-Reduktion am Katalysator dient.

2. Verfahren nach Anspruch 1, **dadurch gekennzeichnet, daß** als Kohlenwasserstoff-Verbindung ein Paraffin, ein Stearin, ein Fett oder ein Wachs verwendet wird.

3. Harnstoff-Dosiervorrichtung zur Durchführung des Verfahrens nach Anspruch 1 oder 2, wobei
- zur Gemengebevorratung des mit einem Trägermaterial gemischten Harnstoffpulvers ein Vorratsbehälter (4) dient, der
- über eine Leitung (5) mit einer Dosiereinheit (6) zur Gemengeeinführung in die Abgasanlage (1) verbunden ist,
**dadurch gekennzeichnet,**
- **daß** zur Verflüssigung des bei Umgebungstemperatur festen Gemengevorrates (3) im Vorratsbehälter (4) dieser mit einem Heizmantel (7) ausgerüstet ist, und
- **daß** in dem einer Vorrats-Verdrängungseinrichtung (8) entgegengesetzten, der Einbringung des festen Gemengevorrates (3) dienenden Endbereich (9) des Vorratsbehälters (4) eine mit einer Begleitheizung (10) ausgestattete Leitung (5) anschließt, wobei
- die mit einem Zwischenspeicher (11) baulich kombinierte Dosiereinheit (6) einen gemeinsamen, von der Betriebstemperatur der Brennkraftmaschine unabhängig betreibbaren Heizmantel (12) aufweist.

4. Dosiervorrichtung nach Anspruch 3, **dadurch gekennzeichnet,**
- **daß** die Verdrängungseinrichtung (8) im Vorratsbehälter (4) einen auf den Gemengevorrat (3) einwirkenden Verdrängerkolben (13) umfaßt, der
- mittels eines Trennkolbens (14) über ein an Bord des Kraftfahrzeuges vorhandenes Hydrauliksystem (15) gegen die Wirkung einer Rückstellfeder (16) betätigt ist.

5. Dosiervorrichtung nach Anspruch 3 und 4, **dadurch gekennzeichnet,**
- **daß** der Vorratsbehälter (4) in seinem Endbereich (9) mit einem Sicherheits-Verschlußdeckel (17) ausgerüstet ist, der
- lediglich bei drucklos gehaltenem Gemengevorrat (3) betätigbar ist.

6. Dosiervorrichtung nach den Ansprüchen 3 bis 5, **dadurch gekennzeichnet,**
- **daß** der Vorratsbehälter (4) mit einem elektrisch und/oder mit bordeigenen flüssigen Betriebsstoffen, d.h. Kühlwasser oder Schmieröl, betreibbaren Heizmantel (7) ausgerüstet ist, wobei
- der Heizmantel (7) im Endbereich (9) des Vorratsbehälters (4) mit angeschlossener Leitung (5) für eine erhöhte Heizleistung ausgelegt ist.

7. Dosiervorrichtung nach den Ansprüchen 3 bis 6, **dadurch gekennzeichnet, daß** die Leitung (5) vom Vorratsbehälter (4) über ein Regelventil (18) an dem Zwischenspeicher (11) der Dosiereinheit (6) angeschlossen ist zur Druckoder Niveauregelung im Zwischenspeicher (11 ).

8. Dosiervorrichtung nach den Ansprüchen 3 bis 7, **dadurch gekennzeichnet, daß** die Dosiereinheit (6) gemäß der Bauart eines Tintenstrahldruckers mit einem Piezoaktor gestaltet ist.

9. Dosiervorrichtung nach einem oder mehreren der Ansprüche 3 bis 8, **gekennzeichnet durch** die Verwendung des Harnstoff-Gemengevorrates (3) als in Kartuschen verpackt oder als zylindrische Tabletten ohne Verpackung.

## Claims

1. A method of nitrogen oxide reduction with urea in exhaust systems of internal combustion engines equipped with a catalytic converter, especially on vehicles,
- wherein a stored mixture (3) of urea powder and a carrier material is used for supplying metered amounts to the exhaust system (1) upstream of the converter,
**characterised in that**
- the carrier material is a hydrocarbon compound with a melting point between a defined ambient temperature ≥ 30°C and a conventional operating temperature range of 70 to 110°C of the engine, wherein
- the hydrocarbon compound is burnt without residue or oxidised at the converter in the exhaust system (1) over the entire temperature range from about 150°C to 850°C and
- the urea liberated in the exhaust gas is reacted with the water in the exhaust gas to form ammonia and used for reduction of NOₓ at the converter.

2. A method according to claim 1, **characterised in that** the carbon compound is a paraffin, a stearin, a fat or a wax.

3. A urea metering device for working the method according to claim 1 or claim 2, wherein the urea mixed with a carrier material is stored in a container (4) which
- is connected by a line (5) to a metering unit (6) for introducing the mixture into the exhaust system (1),
**characterised in that**
- in order to liquefy the stored mixture (3), which is solid at ambient temperature, the storage container (4) is equipped with a heating jacket (7) and
- a line (5) equipped with a secondary heater (10) adjoins the end region (9) of the storage container (4) opposite a store displacement device (8) and used for introducing the solid mixture (3), wherein
- the metering unit (6), which is combined with an intermediate reservoir (11), has a common heating jacket (12) operating independently of the operating temperature of the engine.

4. A metering device according to claim 3, **characterised in that**
- the displacement device (8) in the storage container (4) comprises a displacement piston (13) acting on the store (3) of mixture and
- actuated by a separating piston (14) via a hydraulic system (15) on board the vehicle, against the action of a return spring (16).

5. A metering device according to claims 3 and 4, **characterised in that**
- the end region (9) of the storage container (4) is equipped with a safety closure cap (17) which
- can be actuated only when the stored mixture (3) is not pressurised.

6. A metering device according to claims 3 to 5, **characterised in that**
- the storage container (4) is equipped with a heating jacket operated by electricity and/or by liquid substances on board the vehicle, i.e. cooling water or lubricating oil, wherein
- the heating jacket (7) at the end region (9) of the storage container (4), together with the connected line (5), is designed for a high heating output.

7. A metering device according to claims 3 to 6, **characterised in that** the line (5) from the storage container (4) is connected to the intermediate reservoir (11) in the metering unit (6) via a control valve (18) for controlling the pressure or level in the intermediate reservoir (11).

8. A metering device according to claims 3 to 7, **characterised in that** the metering unit (6) is constructed like an inkjet printer with a piezo-actuator.

9. A metering device according to one or more of claims 3 to 8, **characterised by** use of the stored urea mixture (3) packed in cartridges or in the form of cylindrical tablets without packaging.

## Revendications

1. Procédé de réduction des oxydes d'azote en utilisant l'urée dans les systèmes de gaz d'échappement de moteurs à combustion interne équipés de catalyseurs, notamment pour véhicules automobiles,
- dans lequel un mélange stocké (3), constitué d'une poudre d'urée mélangée avec une matière porteuse est utilisé pour le dosage dans le système de gaz d'échappement (1) en amont du catalyseur,
**caractérisé en ce qu'**
- un composé d'hydrocarbure avec un point de fusion entre une température ambiante prédéterminée ≥ 30°C et une gamme habituelle de températures de service de 70° à 110°C du moteur à combustion interne est choisi comme matière porteuse,
- le composé d'hydrocarbure se consume sans résidu dans le système de gaz d'échappement (1) dans toute la gamme de températures d'environ 150°C à 850°C ou est oxydé sur le catalyseur et
- l'urée dégagée dans le gaz d'échappement est transformée, avec l'eau contenue dans le gaz d'échappement, en ammoniac et celui-ci sert à la réduction de NOₓ sur le catalyseur.

2. Procédé selon la revendication 1,
**caractérisé en ce qu'**
une paraffine, une stéarine, une graisse ou une cire est utilisée comme composé d'hydrocarbure.

3. Dispositif de dosage de l'urée pour la réalisation du procédé selon la revendication 1 ou 2, dans lequel
- pour le stockage du mélange de poudre d'urée mélangée avec une matière porteuse, est utilisé un réservoir de stockage (4) qui
- qui est relié, par une conduite (5), avec une unité de dosage (6) pour l'amenée du mélange dans le système de gaz d'échappement (1),
**caractérisé en ce que**
- pour la liquéfaction du stock de mélange (3), solide à la température ambiante, dans le réservoir de stockage (4), celui-ci est équipé d'une chemise de réchauffage (7) et
- une conduite (5) équipée d'un chauffage associé (10) se raccorde dans la zone d'extrémité (9) du réservoir de stockage (4), servant à l'apport du stock de mélange solide (3), située en face d'un dispositif de poussée du stock (8), et
- l'unité de dosage (6) de construction combinée avec un accumulateur intermédiaire (11) présente une chemise de réchauffage (12) commune, exploitable indépendamment de la température de service du moteur à combustion interne.

4. Dispositif de dosage selon la revendication 3,
**caractérisé en ce que**
- le dispositif de poussée (8) comprend dans le réservoir de stockage (4) un piston de poussée (13) agissant sur le stock de mélange (3),
- piston qui est actionné au moyen d'un piston de séparation (14), par l'intermédiaire d'un système hydraulique (15) présent à bord du véhicule automobile, à l'encontre de l'action d'un ressort de rappel (16).

5. Dispositif de dosage selon la revendication 3 ou 4,
**caractérisé en ce que**
- le réservoir de stockage (4) est équipé, dans sa zone d'extrémité (9), d'un couvercle de fermeture de sécurité (17)
- qui peut être actionné seulement lorsque le stock de mélange (3) est maintenu sans pression.

6. Dispositif de dosage selon les revendications 3 à 5,
**caractérisé en ce que**
- le réservoir de stockage (4) est équipé d'une chemise de réchauffage (7) exploitable électriquement et/ou avec des produits d'exploitation de bord, c'est-à-dire eau de refroidissement ou huile de graissage,
- la chemise de réchauffage (7) étant conçue, dans la zone d'extrémité (9) du réservoir de stockage (4) avec conduite raccordée (5), pour une puissance de chauffage accrue.

7. Dispositif de dosage selon les revendications 3 à 6,
**caractérisé en ce que**
la conduite (5) du réservoir de stockage (4) est raccordée, par l'intermédiaire d'une soupape de régulation (18), à l'accumulateur intermédiaire (11) de l'unité de dosage (6) pour la régulation de la pression ou du niveau dans l'accumulateur intermédiaire (11).

8. Dispositif de dosage selon les revendications 3 à 7,
**caractérisé en ce que**
l'unité de dosage (6) est conçue selon le type de construction d'une imprimante à jet d'encre avec un piézoactionneur.

9. Dispositif de dosage selon une ou plusieurs des revendications 3 à 8,
**caractérisé par**
l'utilisation du stock de mélange d'urée (3) sous forme conditionnée en cartouches ou de comprimés cylindriques sans conditionnement.
